# EUROPEAN PATENT APPLICATION

(11) **EP 2 757 706 A1**
(43) Date of publication of application: **23.07.2014**
(21) Application number: 12831043.0
(22) Date of filing: 06.09.2012
(51) Int. Cl.: H04B 7/04

(54) **WEIGHT FEEDBACK GRANULARITY SETTING METHOD, DEVICE AND SYSTEM**

(30) Priority: 14.09.2011 CN 201110271836
(71) Applicant: Huawei Technologies Co., Ltd, Shenzhen, Guangdong 518129 (CN)
(72) Inventor: LIU, Menghong, Shenzhen Guangdong 518129 (CN); WANG, Xuehuan, Shenzhen Guangdong 518129 (CN); LUO, Long, Shenzhen Guangdong 518129 (CN)
(74) Representative: Isarpatent
(86) International application number: PCT/CN2012/081038
(87) International publication number: WO 2013/037275

(57) **Abstract**

Provided in the embodiments of the present invention are a method, a device and a system for setting a weight feedback granularity, relating to communication technologies, which solve the problem that a beamforming transmitting end can not control a beamforming weight feedback granularity. The method comprises: receiving a null data packet announcement (NDPA) frame comprising a weight feedback granularity requirement value transmitted by the beamforming transmitting end; receiving a null data packet (NDP) frame transmitted by the beamforming transmitting end, and measuring the beamforming weight by using the weight feedback granularity requirement value as a granularity; and transmitting a very high throughput compressed beamforming (VCBF) frame to the beamforming transmitting end, wherein the very high throughput compressed beamforming (VCBF) frame comprises the beamforming weight using the weight feedback granularity requirement value as the granularity. The embodiments of the present inventions are suitable for setting a weight feedback granularity.

## Description

This application claims priority to Chinese Patent Application No. 201110271836.1, filed with Chinese Patent Office on September 14, 2011, and entitled "METHOD, DEVICE AND SYSTEM FOR SETTING A WEIGHT FEEDBACK GRANULARITY", which is incorporated herein by reference in its entirety.

### FIELD OF TECHNOLOGY

The present invention relates to communication technologies, and particularly to a method, a device and a system for setting a weight feedback granularity.

### BACKGROUND

A beamforming technology is a multi-antenna transmission technology using an antenna array with a small spacing, in which, a strong correlation of spatial channels and a principle of wave interference are mainly utilized, and an antenna beam is made to adaptively point in a direction of a user by adjusting a weighted value of each array element of an array antenna, thereby focusing emitted energy in an area which the user is in, and further increasing received signal energy over a communication link.

Provided in the prior art is a method for setting a weight feedback granularity. A specific scheme is described as follows:
a beamforming transmitting end transmits a NDPA (Null Data Packet Announcement, null data packet announcement) frame to a beamforming receiving end to inform the beamforming receiving end to prepare sounding measurement;
after an interval of a SIFS (Short Inter-Frame Space, short inter-frame space), the beamforming transmitting end transmits a NDP (Null Data Packet, null data packet) frame to the beamforming receiving end, for performing sounding (sounding) measurement by the beamforming receiving end;
the beamforming transmitting end transmits a BFRP (Beamforming Report Poll, beamforming report poll) frame to the beamforming receiving end, to require the beamforming receiving end to transmit sounding measurement information such as a beamforming weight and the like;
the beamforming receiving end transmits a VCBF (Very high throughput Compressed Beamforming, very high throughput compressed beamforming) frame including the sounding measurement information such as a weight, a weight granularity and the like to the beamforming transmitting end.

Only the beamforming transmitting end can know channel state of each beamforming receiving end. Therefore, if the beamforming transmitting end controls a weight feedback granularity of the beamforming receiving end, when the beamforming transmitting end performs multi-user beamforming transmission, multi-user grouping management and pairing management (comprising null shunt distribution, pairing weight, pairing gain estimation and the like) can be conveniently performed, the cost (management cost, sounding overhead and the like) can be reduced, and the performance of multiple users can also be ensured to a certain extent. Moreover, the size and the duration of a feedback frame can be determined by the weight feedback granularity, and the beamforming transmitting end can control time by adjusting the weight feedback granularity, in a case that the duration of a transmission chance acquired by the beamforming transmitting end is insufficient.

However, in the existing scheme, the weight feedback granularity is fed back to the beamforming receiving end through the VCBF transmitted by the beamforming receiving end, therefore the weight feedback granularity is completely controlled by the beamforming receiving end, and the weight feedback granularity for beamforming can not be controlled by the beamforming transmitting end.

### SUMMARY

Provided in embodiments of the present invention are a method, a device and a system for setting a weight feedback granularity, to solve the problem that a beamforming transmitting end can not control the beamforming weight feedback granularity.

In order to achieve the above objective, the following technical solutions are employed in the embodiments of the present invention:
in an aspect, provided is a method for setting a weight feedback granularity, comprising:
   receiving a null data packet announcement (NDPA) frame comprising a weight feedback granularity requirement value transmitted by a beamforming transmitting end;
   receiving a null data packet (NDP) frame transmitted by the beamforming transmitting end, measuring a beamforming weight by using the weight feedback granularity requirement value as a granularity, and transmitting a very high throughput compressed beamforming (VCBF) frame to the beamforming transmitting end, wherein the very high throughput compressed beamforming (VCBF) frame comprises the beamforming weight using the weight feedback granularity requirement value as the granularity.

In an aspect, provided is a method for setting a weight feedback granularity, comprising:
receiving a beamforming report poll frame (BRPF) comprising a weight feedback granularity requirement value transmitted by a beamforming transmitting end;
transmitting a very high throughput compressed beamforming (VCBF) frame to the beamforming transmitting end, wherein the very high throughput compressed beamforming (VCBF) frame comprises a beamforming weight using the weight feedback granularity requirement value as a granularity.

In an aspect, provided is a method for setting a weight feedback granularity, comprising:
receiving capability interaction information comprising a weight feedback granularity requirement value transmitted by a beamforming transmitting end;
receiving a null data packet (NDP) frame transmitted by the beamforming transmitting end, measuring a beamforming weight by using the weight feedback granularity requirement value as a granularity, and transmitting a very high throughput compressed beamforming (VCBF) frame to the beamforming transmitting end, wherein the very high throughput compressed beamforming (VCBF) frame comprises the beamforming weight using the weight feedback granularity requirement value as the granularity.

In an aspect, provided is a method for setting a weight feedback granularity, comprising:
transmitting a weight feedback granularity requirement value to a beamforming receiving end;
receiving a beamforming weight using the weight feedback granularity requirement value as a granularity, which is returned by the beamforming receiving end.

In an aspect, provided is a beamforming receiving end device, comprising:
a null data packet announcement frame receiving unit, configured to receive a null data packet announcement (NDPA) frame comprising a weight feedback granularity requirement value transmitted by a beamforming transmitting end;
a first weight feedback transmitting unit, configured to transmit a very high throughput compressed beamforming (VCBF) frame to the beamforming transmitting end, after receiving a null data packet (NDP) frame transmitted by the beamforming transmitting end and measuring a beamforming weight by using the weight feedback granularity requirement value as a granularity, wherein the very high throughput compressed beamforming (VCBF) frame comprises the beamforming weight using the weight feedback granularity requirement value as the granularity.

In an aspect, provided is a beamforming receiving end device, comprising:
a beamforming report poll frame receiving unit, configured to receive a beamforming report poll frame (BRPF) comprising a weight feedback granularity requirement value transmitted by a beamforming transmitting end;
a second weight feedback transmitting unit, configured to transmit a very high throughput compressed beamforming (VCBF) frame to the beamforming transmitting end, wherein the very high throughput compressed beamforming (VCBF) frame comprises a beamforming weight using the weight feedback granularity requirement value as a granularity.

In an aspect, provided is a beamforming receiving end device, comprising:
a capability information interacting unit, configured to receive capability interaction information comprising a weight feedback granularity requirement value transmitted by a beamforming transmitting end;
a third weight feedback transmitting unit, configured to transmit a very high throughput compressed beamforming (VCBF) frame to the beamforming transmitting end, after receiving a null data packet (NDP) frame transmitted by the beamforming transmitting end and measuring a beamforming weight by using the weight feedback granularity requirement value as a granularity, wherein the very high throughput compressed beamforming (VCBF) frame comprises the beamforming weight using the weight feedback granularity requirement value as the granularity.

In an aspect, provided is a beamforming transmitting end device, comprising:
a weight feedback granularity requirement value transmitting unit, configured to transmit a weight feedback granularity requirement value to a beamforming receiving end;
a weight receiving unit, configured to receive a beamforming weight returned by the beamforming receiving end.

In an aspect, provided is a system for setting a weight feedback granularity, comprising:
a beamforming transmitting end device, configured to transmit a weight feedback granularity requirement value to a beamforming receiving end through a null data packet announcement (NDPA) frame; or
to transmit a weight feedback granularity requirement value to a beamforming receiving end through a beamforming report poll frame (BRPF); or
to transmit a weight feedback granularity requirement value to a beamforming receiving end through very high throughput capability information (VCIF);
a beamforming receiving end device, configured to receive the weight feedback granularity requirement value transmitted by the beamforming transmitting end, and to return a beamforming weight using the weight feedback granularity requirement value as a granularity through a very high throughput compressed beamforming (VCBF) frame;
wherein the beamforming transmitting end device is further configured to receive the beamforming weight returned by the beamforming receiving end device.

The embodiments of the present invention provide a method, a device and a system for setting a weight feedback granularity, provided in, wherein, the beamforming receiving end receives a NDPA frame comprising a weight feedback granularity requirement value transmitted by the beamforming transmitting end, and transmits a very high throughput compressed beamforming (VCBF) frame to the beamforming transmitting end after receiving a null data packet (NDP) frame transmitted by the beamforming transmitting end and measuring a beamforming weight by using the weight feedback granularity requirement value as a granularity" wherein the very high throughput compressed beamforming (VCBF) frame comprises the beamforming weight using the weight feedback granularity requirement value as the granularity. Thus, the beamforming transmitting end is enabled to control the weight feedback granularity, thereby better managing users.

### BRIEF DESCRIPTION OF DRAWINGS

In order to illustrate technical solutions in the embodiments of the present invention or in the prior art more clearly, brief description will be made below to the accompanying drawings required in the embodiments of the present invention or the prior art, and apparently, the accompanying drawings described below are only some embodiments of the present invention, and other accompanying drawings can be obtained by those skilled in the art without inventive efforts based on these drawings.
Fig. 1 is a schematic flowchart of a method for setting a weight feedback granularity provided by embodiment I of the present invention;
Fig. 2 is a schematic flowchart of another method for setting a weight feedback granularity provided by embodiment I of the present invention;
Fig. 3 is a schematic flowchart of yet another method for setting a weight feedback granularity provided by embodiment I of the present invention;
Fig. 4 is a schematic flowchart of still yet another method for setting a weight feedback granularity provided by embodiment I of the present invention;
Fig. 5 is a part of a schematic diagram of a method for setting a weight feedback granularity provided by embodiment II of the present invention;
Fig. 6 is a part of a schematic diagram of another method for setting a weight feedback granularity provided by embodiment III of the present invention;
Fig. 7 is a part of a schematic diagram of yet another method for setting a weight feedback granularity provided by embodiment IV of the present invention;
Fig. 8 is a block diagram of a beamforming receiving end device provided by embodiment V of the present invention;
Fig. 9 is a block diagram of another beamforming receiving end device provided by embodiment V of the present invention;
Fig. 10 is a block diagram of yet another beamforming receiving end device provided by embodiment V of the present invention;
Fig. 11 is a block diagram of a beamforming transmitting end device provided by embodiment V of the present invention;
Fig. 12 is a block diagram of another beamforming transmitting end device provided by embodiment V of the present invention;
Fig. 13 is a schematic diagram of a system for setting a weight feedback granularity provided by embodiment V of the present invention.

### DESCRIPTION OF EMBODIMENTS

A clear and complete description of technical solutions of the embodiments of the present invention will be given below, in conjunction with the accompanying drawings in the embodiments of the present invention, and apparently, the embodiments described below are only a part, but not all, of the embodiments of the present invention. All of other embodiments, obtained by those skilled in the art based on the embodiments of the present invention without any inventive efforts, fall into the protection scope of the present invention.

### Embodiment I

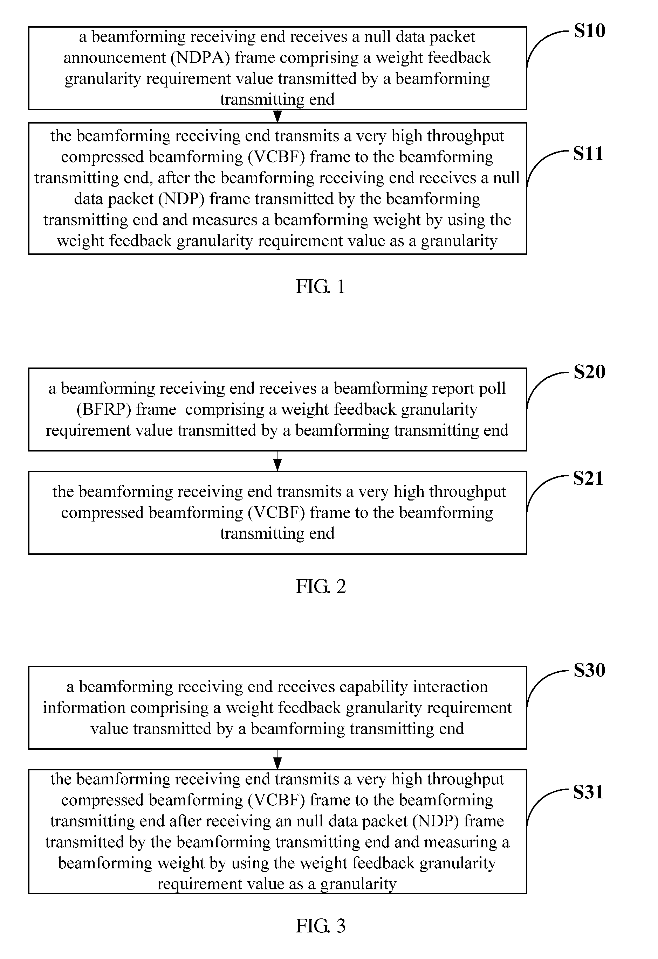

Provided in an embodiment of the present invention is a method for setting a weight feedback granularity. As shown in Fig. 1, the specific steps include:
S10, a beamforming receiving end receives a null data packet announcement (NDPA) frame comprising a weight feedback granularity requirement value transmitted by a beamforming transmitting end.

Wherein, the NDPA is used for informing the beamforming receiving end to prepare sounding measurement.

S11, the beamforming receiving end transmits a very high throughput compressed beamforming (VCBF) frame to the beamforming transmitting end, after the beamforming receiving end receives a null data packet (NDP) frame transmitted by the beamforming transmitting end and measures a beamforming weight by using the weight feedback granularity requirement value as a granularity.

The very high throughput compressed beamforming (VCBF) frame comprises the beamforming weight using the weight feedback granularity requirement value as the granularity.

The embodiment of the present invention provides a method for setting a weight feedback granularity, wherein the beamforming receiving end receives a null data packet announcement (NDPA) frame comprising a weight feedback granularity requirement value transmitted by the beamforming transmitting end, and transmits a very high throughput compressed beamforming (VCBF) frame to the beamforming transmitting end, after receiving a null data packet (NDP) frame transmitted by the beamforming transmitting end and measuring a beamforming weight by using the weight feedback granularity requirement value as a granularity, wherein the very high throughput compressed beamforming (VCBF) frame comprises the beamforming weight using the weight feedback granularity requirement value as the granularity. Thus, the beamforming transmitting end is enabled to control the weight feedback granularity, thereby better managing users.

Provided in an embodiment of the present invention is another method for setting a weight feedback granularity. As shown in Fig. 2, the following steps are comprised:
S20, a beamforming receiving end receives a beamforming report poll frame (BRPF) comprising a weight feedback granularity requirement value transmitted by a beamforming transmitting end;
S21, the beamforming receiving end transmits a very high throughput compressed beamforming (VCBF) frame to the beamforming transmitting end, wherein the very high throughput compressed beamforming (VCBF) frame comprises a beamforming weight using the weight feedback granularity requirement value as a granularity.

Wherein, the BRPF is used for requiring the beamforming receiving end to feed back the very high throughput compressed beamforming (VCBF) frame.

The embodiment of the present invention provides a method for setting weight feedback granularity, wherein, the beamforming receiving end receives a beamforming report poll frame (BRPF) comprising a weight feedback granularity requirement value transmitted by the beamforming transmitting end, and transmits a very high throughput compressed beamforming (VCBF) frame to the beamforming transmitting end after the beamforming receiving end receives the BRPF, wherein the very high throughput compressed beamforming (VCBF) frame comprises the beamforming weight using the weight feedback granularity requirement value as a granularity. Thus, the beamforming transmitting end is enabled to control the weight feedback granularity, thereby better managing users.

Moreover, also provided in an embodiment of the present invention is a method for setting a weight feedback granularity. As shown in Fig. 3, the following steps are comprised:
S30, a beamforming receiving end receives capability interaction information comprising a weight feedback granularity requirement value transmitted by a beamforming transmitting end;
wherein, very high throughput capability information (VCIF) comprised in the capability interaction information is carried in a capability interaction process between the beamforming receiving end and the beamforming transmitting end. The capability interaction process comprises an association process, a re-association process, a start process, a probe process, a beacon frame transmitting process or the like.
S31, the beamforming receiving end transmits a very high throughput compressed beamforming (VCBF) frame to the beamforming transmitting end after receiving a null data packet (NDP) frame transmitted by the beamforming transmitting end and measuring a beamforming weight by using the weight feedback granularity requirement value as a granularity.

The very high throughput compressed beamforming (VCBF) frame comprises the beamforming weight using the weight feedback granularity requirement value as the granularity.

The embodiment of the present invention provides a method for setting a weight feedback granularity, wherein, the beamforming receiving end receives capability interaction information comprising a weight feedback granularity requirement value transmitted by the beamforming transmitting end, and transmits a very high throughput compressed beamforming (VCBF) frame to the beamforming transmitting end after the beamforming receiving end receives a null data packet (NDP) frame transmitted by the beamforming transmitting end and measures a beamforming weight by using the weight feedback granularity requirement value as a granularity" wherein the very high throughput compressed beamforming (VCBF) frame comprises the beamforming weight using the weight feedback granularity requirement value as the granularity. Thus, the beamforming transmitting end is enabled to control the weight feedback granularity, thereby better managing users.

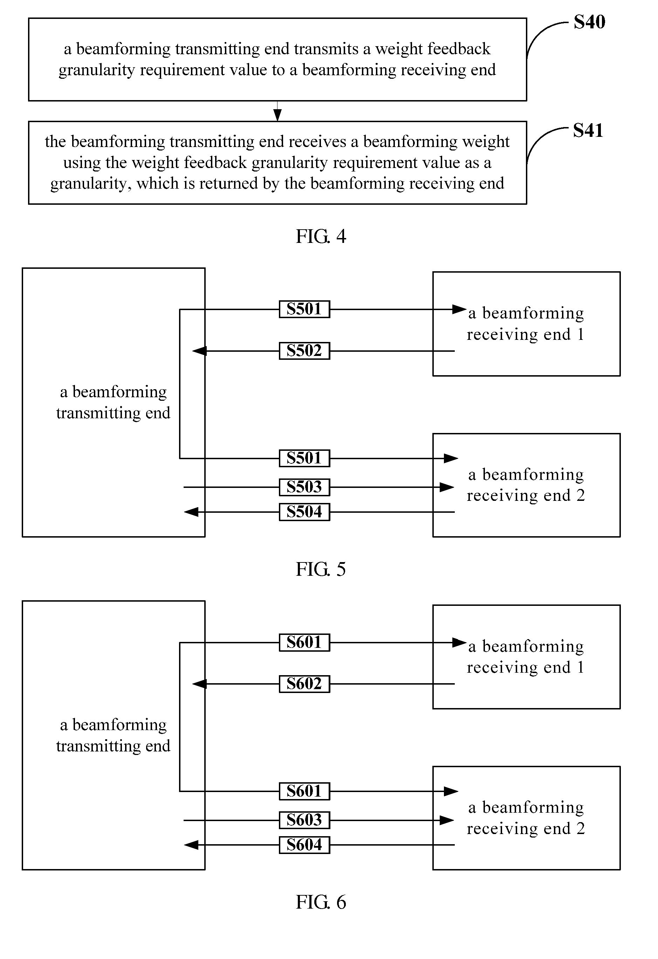

In another aspect, provided in an embodiment of the present invention is a method for setting a weight feedback granularity. The method is a method on the side of a beamforming transmitting end. As shown in Fig. 4, the following steps are comprised:
S40, a beamforming transmitting end transmits a weight feedback granularity requirement value to a beamforming receiving end;
S41, the beamforming transmitting end receives a beamforming weight using the weight feedback granularity requirement value as a granularity, which is returned by the beamforming receiving end

Wherein, the beamforming receiving end transmits the weight feedback granularity requirement value, wherein the weight feedback granularity requirement value may be transmitted to the beamforming receiving end through a null data packet announcement (NDPA) frame; or
the weight feedback granularity requirement value is transmitted to the beamforming receiving end through a beamforming report poll frame (BRPF); or
the weight feedback granularity requirement value is transmitted to the beamforming receiving end through very high throughput capability information (VCIF).

The embodiment of the present invention provides a method for setting a weight feedback granularity, wherein, the beamforming transmitting end transmits a weight feedback granularity requirement value to the beamforming receiving end, and the beamforming transmitting end receives a beamforming weight using the weight feedback granularity requirement value as a granularity, which is returned by the beamforming receiving end. Thus, the beamforming transmitting end is enabled to control the weight feedback granularity, thereby better managing users.

### Embodiment II

Provided in an embodiment of the present invention is a method for setting a weight feedback granularity. As shown in Fig. 5, a specific embodiment comprises the following steps:
S500, a beamforming transmitting end transmits a NDPA comprising a weight feedback granularity requirement value, and a beamforming receiving end receives the NDPA comprising the weight feedback granularity requirement value.

In a multi-user scenario, site information of the NDPA comprises at least two pieces of site information, Site information 1 and site information 2 are taken as examples for description in the embodiment of the present invention, but not limited to this.

Wherein, a format of the NDPA is shown in table 1 below:

**Table 1**

| Information | Size (byte) | Note |
|---|---|---|
| Frame Control | 2 | |
| Duration | 2 | |
| RA | 6 | |
| TA | 6 | |
| Sounding Sequence | 1 | |
| Site Information 1 | 2 | |
| Site Information 2 | 2 | |
| FCS | 4 | |

A format of the sounding sequence in the NDPA is shown in table 2 below:

**Table 2**

| Information | Size (bit) | Note |
|---|---|---|
| Reserved Field | 2 | |
| Sequence Number | 6 | |

A structure of the site information field in the NDPA is shown in table 3 below:

**Table 3**

| Information | Size (bit) | Note |
|---|---|---|
| Association Identity | 12 | identifying site information |
| Feedback Type | 1 | if the feedback type is 0, a single user is indicated; |
| | | if the feedback type is 1, multiple users are indicated. |
| Nc Index | 3 | if the feedback type is 1, a required feedback dimension is indicated ; |
| | | if the feedback type is |
| | | 0, field reservation is indicated. |

The weight feedback granularity requirement value may be set in the reserved information field in the sounding sequence field of the NDPA, as shown in table 4 below:

**Table 4**

| Information | Size (bit) | Note |
|---|---|---|
| Weight Feedback Granularity Requirement Value | 2 | the reserved field indicates the weight feedback granularity requirement value |
| Sequence Number | 6 | |

The weight feedback granularity requirement value may also be set in a newly added weight feedback granularity request field in the NDPA, as shown in table 5,

**Table 5**

| Information | Size (byte) | Note |
|---|---|---|
| Frame Control | 2 | |
| Duration | 2 | |
| RA | 6 | |
| TA | 6 | |
| Sounding Sequence | 1 | |
| Weight Feedback Granularity Request Field | 1 | a newly added weight feedback granularity request field |
| Site Information 1 | 2 | |
| Site Information 2 | 2 | |
| FCS | 4 | |

A structure of the weight feedback granularity request field is shown in table 6 below:

**Table 6**

| Information | Size (bit) | Note |
|---|---|---|
| Weight Feedback Granularity Requirement Value | 2 | |
| Reserved Field | 6 | |

The newly added weight feedback granularity request field is totally 8 bits, wherein any 2 bits may be used for indicating the weight feedback granularity requirement value.

The newly added weight feedback granularity request field may be set after the sounding sequence field, and may also be set before the sounding sequence field. The embodiment of the present invention set no limitation to it.

Moreover, the weight feedback granularity requirement value may also be set in the reserved information field of the site information in the NDPA, wherein,
if the feedback type of the site information is 0, any 1 bit of the12 bits of the association identity may be reserved, and all of the 3 bits of the Nc index are reserved. Therefore, a total of 4 bits are reserved, and the weight feedback granularity requirement value is indicated by any 2 bits of the 4 bits;
if the feedback type of the site information is 1, any 1 bit of the 12 bits of the association identity may be reserved, and any 1 bit of the 3 bits of the Nc index is reserved, and the weight feedback granularity requirement value is indicated by the 2 bits.

In addition, the weight feedback granularity requirement value may also be set in a newly added weight feedback granularity request field of the site information of the NDPA. A structure of the site information field in which the weight feedback granularity request field is set is shown in table 7.

**Table 7**

| Information | Size (bit) | Note |
|---|---|---|
| Association Identity | 12 | identifying site information |
| Feedback Type | 1 | if the feedback type is 0, a single user is indicated; |
| | | if the feedback type is 1, multiple users are indicated. |
| Nc Index | 3 | if the feedback type is 1, a required feedback dimension is indicated; |
| | | if the feedback type is 0, field reservation is indicated. |
| Weight Feedback Granularity Request Field | 8 | a newly added weight feedback granularity request field |

A structure of the weight feedback granularity request field is shown in table 6.

The newly added weight feedback granularity request field is totally 8 bits, wherein any 2 bits may be used for indicating the weight feedback granularity requirement value.

The newly added weight feedback granularity request field may be set at the head of or at the tail of the site information field, and may also be set at any position of the association identity, the feedback type and the Nc index in the site information.

For example, the weight feedback granularity requirement value field mentioned above may be set as 2 bits, and a corresponding value range is {0, 1, 2, 3}, wherein three values correspond to the weight feedback granularities 1, 2 and 4 respectively, and a remaining value is reserved or indicates no requirement for the feedback weight granularity of the beamforming receiving end, e.g., 0 indicates that the feedback weight granularity is 1, 1 indicates that the feedback weight granularity is 2, 2 indicates the feedback weight granularity is 4, and 3 is reserved or indicates no requirement for the feedback weight granularity of the beamforming receiving end.

S501, after an interval of a SIFS, the beamforming transmitting end transmits a NDP and the beamforming receiving end receives the NDP and measures a beamforming weight by using the weight feedback granularity requirement value as a granularity.

S502, a beamforming receiving end 1 corresponding to the site information 1 in the NDPA transmits a VCBF to the beamforming transmitting end, wherein the VCBF comprises a beamforming weight using the weight feedback granularity requirement value as the granularity.

Wherein, a format of the VCBF is shown in table 8:

**Table 8**

| Information | Note |
|---|---|
| Type | |
| VHT Function | |
| VHT MIMO Control | |
| VHT Compressed Beamforming Report | |
| Multi-user Display Beamforming Report | |

A format of the VHT MIMO control field in the VCBF is shown in table 9:

**Table 9**

| Information | Size (bit) | Note |
|---|---|---|
| Nc index | 3 | |
| Nr index | 3 | |
| Channel width | 2 | |
| Grouping | 2 | |
| Codebook information | 1 | |
| Feedback Type | 1 | |
| Remaining Segments | 3 | |
| First Segments | 1 | |
| Reserved | 4 | |
| Sounding Sequence | 6 | |

The Grouping in the VHT MIMO control field indicates the weight feedback granularity.

S503, the beamforming transmitting end transmits a BFRP to request a beamforming receiving end 2 corresponding to the site information 2 to transmit a VCBF to the beamforming transmitting end.

Wherein, a structure of the BRPF is shown in table 10:

**Table 10**

| Information | Size (byte) | Note |
|---|---|---|
| Frame Control | 2 | |
| Duration | 2 | |
| RA | 6 | |
| TA | 6 | |
| Fragment Retransmission Bitmap | 1 | |
| FCS | 4 | |

S504, the beamforming receiving end 2 corresponding to the site information 2 transmits a VCBF to the beamforming transmitting end, wherein the VCBF comprises a beamforming weight using the weight feedback granularity requirement value as the granularity.

The embodiment of the present invention provides a method for setting a weight feedback granularity, wherein, the beamforming receiving end receives a null data packet announcement (NDPA) frame comprising a weight feedback granularity requirement value transmitted by the beamforming transmitting end , wherein the weight feedback granularity requirement value may be set before or after a sounding sequence in the NDPA field, or in a reserved part of the sounding sequence field, and may also be set in any part or a reserved field of a site information field in the NDPA field, and the beamforming receiving end transmits a very high throughput compressed beamforming (VCBF) frame to the beamforming transmitting end after receiving a null data packet (NDP) frame transmitted by the beamforming transmitting end and measuring a beamforming weight by using the weight feedback granularity requirement value as a granularity, wherein the very high throughput compressed beamforming (VCBF) frame comprises the beamforming weight using the weight feedback granularity requirement value as the granularity. Thus, the beamforming transmitting end is enabled to control the weight feedback granularity, thereby better managing users.

### Embodiment III

Provided in an embodiment of the present invention is a method for setting a weight feedback granularity. The embodiment of the method is applied to a multi-user scenario. As shown in Fig. 6, a specific embodiment comprises the following steps:
S600, a beamforming transmitting end transmits a NDPA, and a beamforming receiving end receives the NDPA.
S601, after an interval of a SIFS, the beamforming transmitting end transmits a NDP, and the beamforming receiving end receives the NDP and measures a beamforming weight.

In addition, a structure of the NDPA is shown in table 1 or shown as the update structure of the NDPA added with the weight feedback granularity requirement value field in embodiment II.

In the site information of the NDPA, the site information 1 corresponds to the beamforming receiving end 1. A weight feedback granularity of the beamforming receiving end 1 is directly fed back to the beamforming transmitting end through a VCBF, as illustrated in step S602.

S602, the beamforming receiving end 1 transmits the VCBF to the beamforming transmitting end.

If the NDPA comprises a weight feedback granularity requirement value, the beamforming receiving end 1 feeds back a beamforming weight by using the weight feedback granularity requirement value as a granularity; if the NDPA does not comprises a weight feedback granularity requirement value, but previous capability interaction information comprises the weight feedback granularity requirement value, the beamforming receiving end 1 feeds back the beamforming weight by using the weight feedback granularity requirement value in the capability interaction information as a granularity; if neither the NDPA nor the previous capability interaction information comprises a weight feedback granularity requirement value, the beamforming receiving end 1 determines a weight feedback granularity by itself or feeds back a beamforming weight by using a minimum supported weight feedback granularity by default.

In site information of the NDPA, the site information 2 after the site information 1 corresponds to the beamforming receiving end 2. The beamforming receiving end 2 transmits a VCBF comprising a weight feedback granularity requirement value to the beamforming transmitting end, after receiving a BFRP comprising a weight feedback granularity requirement value transmitted by the beamforming transmitting end, as illustrated in step 603.

S603, the beamforming transmitting end transmits a BFRP comprising a weight feedback granularity requirement value to request the beamforming receiving end 2 to transmit a VCBF to the beamforming transmitting end, wherein the VCBF comprising a beamforming weight using the weight feedback granularity requirement value as a granularity.

In a multi-user scenario, the site information of the NDPA comprises at least two pieces of site information. Site information 1 and site information 2 are taken as examples for description in the embodiment of the present invention, but not limited to this.

The weight feedback granularity requirement value may be set in a newly added weight feedback granularity request field of the VCBF, as shown in table 11:

**Table 11**

| Information | Size (byte) | Note |
|---|---|---|
| Frame Control | 2 | |
| Duration | 2 | |
| RA | 6 | |
| TA | 6 | |
| Fragment Retransmission Bitmap | 1 | |
| Weight Feedback Granularity Request Field | 1 | a newly added weight feedback granularity request field |
| FCS | 4 | |

The newly added weight feedback granularity request field may be set before the fragment retransmission bitmap, and may also be set after the fragment retransmission bitmap.

A structure of the weight feedback granularity request field is shown in table 6.

The newly added weight feedback granularity request field is totally 8 bits, wherein any 2 bits may be used for indicating the weight feedback granularity requirement value.

For example, the weight feedback granularity requirement value field mentioned above may be set as 2 bits, and a corresponding value range is {0, 1, 2, 3}, wherein three values correspond to the weight feedback granularities 1, 2 and 4 respectively, and a remaining value is reserved or indicates no requirement for the feedback weight granularity of the beamforming receiving end, e.g., 0 indicates that the feedback weight granularity is 1, 1 indicates that the feedback weight granularity is 2, 2 indicates that the feedback weight granularity is 4, and 3 is reserved or indicates no requirement for the feedback weight granularity of the beamforming receiving end.

S604, the beamforming receiving end 2 corresponding to the site information 2 transmits a VCBF to the beamforming transmitting end, wherein the VCBF comprises a beamforming weight using the weight feedback granularity requirement value as the granularity.

In addition, in the steps S602 and S604, the weight feedback granularity requirement values comprised in the VCBFs finally transmitted by the beamforming receiving end 1 and the beamforming receiving end 2 is determined according to the following criteria: if the BFRP comprises a weight feedback granularity requirement value (the weight feedback granularity is 1 or 2 or 4), it is determined by the weight feedback granularity requirement value comprised in the BFRP; if the BFRP does not comprise a weight feedback granularity requirement value and the NDPA comprises a weight feedback granularity requirement value (the weight feedback granularity is 1 or 2 or 4), it is determined by the weight feedback granularity requirement value comprised in the NDPA; if neither the NDPA nor the BFRP comprises a weight feedback granularity requirement value, the beamforming receiving end determines a weight feedback granularity by itself or feeds back a beamforming weight by using a minimum supported weight feedback granularity by default.

In this embodiment, if both the NDPA and the BFRP comprise a weight feedback granularity requirement value, the weight feedback granularity requirement value comprised in the NDPA is used by the beamforming receiving end 1. A specific implementation is referred to embodiment II, which is not described redundantly in the embodiment of the present invention. The weight feedback granularity requirement value comprised in the BFRP is used by the beamforming receiving end 2.

The embodiment of the present invention provides a method for setting a weight feedback granularity, wherein, the beamforming receiving end receives a beamforming report poll frame (BRPF) comprising a weight feedback granularity requirement value transmitted by the beamforming transmitting end, and transmits a very high throughput compressed beamforming (VCBF) frame to the beamforming transmitting end after receiving the BRPF, wherein the very high throughput compressed beamforming (VCBF) frame comprises a beamforming weight using the weight feedback granularity requirement value as a granularity. Thus, the beamforming transmitting end is enabled to control the weight feedback granularity, thereby better managing users.

### Embodiment IV

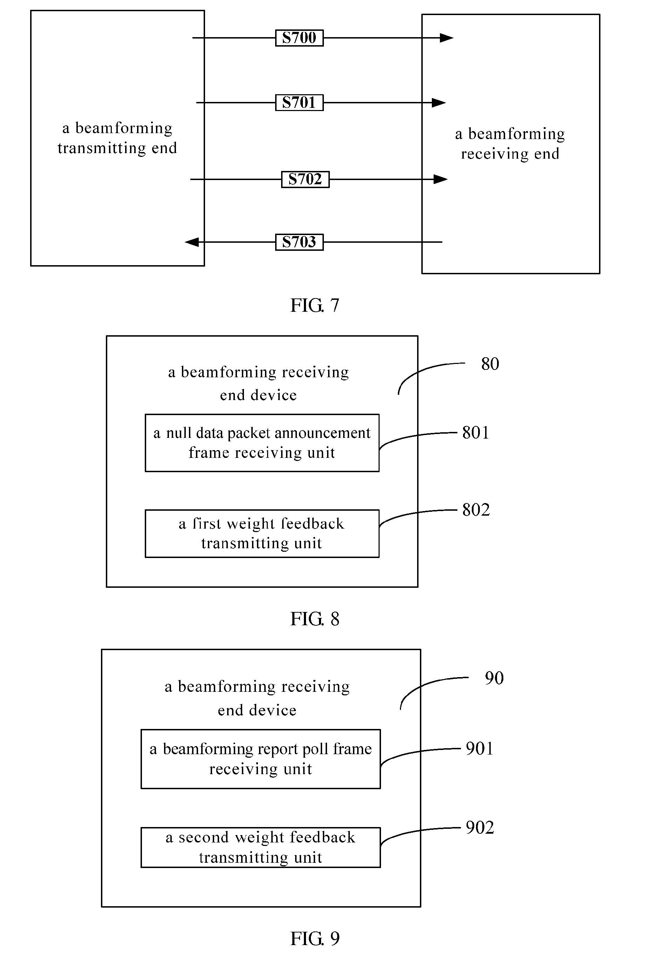

Provided in an embodiment of the present invention is a method for setting a weight feedback granularity. As shown in Fig. 7, a specific embodiment comprises the following steps:
S700, a beamforming transmitting end transmits capability interaction information comprising a weight feedback granularity requirement value to a beamforming receiving end.

Wherein, VCIF in the capability interaction information is shown in table 12:

**Table 12**

| Information | Size (bit) | Note |
|---|---|---|
| Maximum MPDU length | 2 | |
| Supported Channel Width SET | 2 | |
| LDPC Coding Capability | 1 | |
| Short G1 for 80MHz | 1 | |
| Short G1 for 160 and 80+80MHz | 1 | |
| Tx STBC | 1 | |
| Rx STBC | 3 | |
| SU Beamformer Capable | 1 | |
| SU Beamformee Capable | 1 | |
| Compressed Steering Number of Beamformer Antennas Supported | 3 | |
| Number Of Sounding Dimensions | 3 | |
| MU Beamformer Capable | 1 | |
| MU Beamformere Capable | 1 | |
| VHT TXOP PS | 1 | |
| +HTC-VHT Capable | 1 | |
| Maximum A-MPDU Length Exponent | 3 | |
| VHT Link Adaptation Capable | 2 | |
| Reserved Field | 4 | |

The weight feedback granularity requirement value may be set in a newly added weight feedback granularity request field in the VCIF of the capability interaction information, as shown in table 13.

**Table 13**

| Information | Size (bit) | Note |
|---|---|---|
| Maximum MPDU length | 2 | |
| Supported Channel Width SET | 2 | |
| LDPC Coding Capability | 1 | |
| Short G1 for 80MHz | 1 | |
| Short G1 for 160 and 80+80MHz | 1 | |
| Tx STBC | 1 | |
| Rx STBC | 3 | |
| SU Beamformer Capable | 1 | |
| SU Beamformee Capable | 1 | |
| Compressed Steering Number of Beamformer Antennas Supported | 3 | |
| Number Of Sounding Dimensions | 3 | |
| MU Beamformer Capable | 1 | |
| MU Beamformere Capable | 1 | |
| VHT TXOP PS | 1 | |
| +HTC-VHT Capable | 1 | |
| Maximum A-MPDU Length Exponent | 3 | |
| VHT Link Adaptation Capable | 2 | |
| Reserved Field | 4 | |
| Weight Feedback Granularity request Field | 8 | a newly added weight feedback granularity request field |

Wherein, the newly added weight feedback granularity request field may be set at any position in the VCIF field.

A structure of the weight feedback granularity request field is shown in table 6.

The newly added weight feedback granularity request field is totally 8 bits, wherein any 2 bits may be used for indicating the weight feedback granularity requirement value.

The weight feedback granularity requirement value may also be set in the reserved information field of the VCIF, and any 2 bits in the field is taken for indicating the weight feedback granularity requirement value, as shown in table 14:

**Table 14**

| Information | Size (bit) | Note |
|---|---|---|
| Maximum MPDU length | 2 | |
| Supported Channel Width SET | 2 | |
| LDPC Coding Capability | 1 | |
| Short G1 for 80MHz | 1 | |
| Short G1 for 160 and 80+80MHz | 1 | |
| Tx STBC | 1 | |
| Rx STBC | 3 | |
| SU Beamformer Capable | 1 | |
| SU Beamformee Capable | 1 | |
| Compressed Steering Number of Beamformer Antennas Supported | 3 | |
| Number Of Sounding Dimensions | 3 | |
| MU Beamformer Capable | 1 | |
| MU Beamformere Capable | 1 | |
| VHT TXOP PS | 1 | |
| +HTC-VHT Capable | 1 | |
| Maximum A-MPDU Length Exponent | 3 | |
| VHT Link Adaptation Capable | 2 | |
| Weight Feedback Granularity Requirement Value | 4 | wherein, any 2 bits of the reserved field indicates the weight feedback granularity requirement value |

For example, the weight feedback granularity requirement value field mentioned above may be set as 2 bits, and a corresponding value range is {0, 1, 2, 3}, wherein three values correspond to the weight feedback granularities 1, 2 and 4 respectively, and a remaining value is reserved or indicates no requirement for the feedback weight granularity of the beamforming receiving end, e.g., 0 indicates that the feedback weight granularity is 1, 1 indicates that the feedback weight granularity is 2, 2 indicates the feedback weight granularity is 4, and 3 is reserved or indicates no requirement for the feedback weight granularity of the beamforming receiving end.

S701, the beamforming transmitting end transmits a NDPA, and the beamforming receiving end receives the NDPA.

S702, after an interval of a SIFS, the beamforming transmitting end transmits a NDP, and the beamforming receiving end receives the NDP and measures a beamforming weight.

S703, the beamforming receiving end transmits a VCBF to the beamforming transmitting end, wherein the VCBF comprises the beamforming weight using the feedback weight granularity requirement value as a granularity.

In addition, in the step S703, the weight feedback granularity requirement value comprised in the VCBF finally transmitted by the beamforming receiving end may also be determined according to the following criteria: if a BFRP comprises a weight feedback granularity requirement value (the weight feedback granularity is 1 or 2 or 4), it is determined by the weight feedback granularity requirement value comprised in the BFRP; if the BFRP does not comprise a weight feedback granularity requirement value and the NDPA comprises a weight feedback granularity requirement value (the weight feedback granularity is 1 or 2 or 4), it is determined by the weight feedback granularity requirement value comprised in the NDPA; if neither the NDPA nor the BFRP comprises a weight feedback granularity requirement value and the VCIF in the capability interaction information comprises a weight feedback granularity requirement value (the weight feedback granularity is 1 or 2 or 4), it is determined by the weight feedback granularity requirement value comprised in the VCIF; if none of the NDPA, the BFRP or the VCIF comprises a weight feedback granularity requirement value, the beamforming receiving end determines a weight feedback granularity by itself or feeds back a beamforming weight by using a minimum supported weight feedback granularity by default.

In this embodiment, if both the NDPA and the VCIF in the capability interaction information comprise a weight feedback granularity requirement value, the weight feedback granularity requirement value comprised in the NDPA is used by the beamforming receiving end. A specific implementation is referred to embodiment II, which is not described redundantly in the embodiment of the present invention.

The embodiment of the present invention provides a method for setting a weight feedback granularity, wherein, the beamforming receiving end receives capability interaction information comprising the weight feedback granularity requirement value transmitted by the beamforming transmitting end , and transmits a very high throughput compressed beamforming (VCBF) frame to the beamforming transmitting end after receiving a null data packet (NDP) frame transmitted by the beamforming transmitting end and measuring a beamforming weight by using the weight feedback granularity requirement value as a granularity, wherein the very high throughput compressed beamforming (VCBF) frame comprises the beamforming weight using the weight feedback granularity requirement value as the granularity. Thus, the beamforming transmitting end is enabled to control the weight feedback granularity, thereby better managing users.

### Embodiment V

Provided in an embodiment of the present invention is a beamforming receiving end device 80, as shown in Fig. 8, comprising:
a null data packet announcement frame receiving unit 801, configured to receive a null data packet announcement (NDPA) frame comprising a weight feedback granularity requirement value transmitted by a beamforming transmitting end;
a first weight feedback transmitting unit 802, configured to transmit a very high throughput compressed beamforming (VCBF) frame to the beamforming transmitting end after receiving a null data packet (NDP) frame transmitted by the beamforming transmitting end and measuring a beamforming weight by using the weight feedback granularity requirement value as a granularity, wherein the very high throughput compressed beamforming (VCBF) frame comprising the beamforming weight using the weight feedback granularity requirement value as the granularity.

In addition, the weight feedback granularity requirement value is set in a reserved information field in a sounding sequence field of the NDPA, or set in a newly added weight feedback granularity request field of the NDPA, or set in a reserved information field of site information of the NDPA, or set in a newly added weight feedback granularity request field of the site information.

The embodiment of the present invention provides a beamforming receiving end device. The device receives a null data packet announcement (NDPA) frame comprising a weight feedback granularity requirement value transmitted by the beamforming transmitting end, , and transmits a very high throughput compressed beamforming (VCBF) frame to the beamforming transmitting end after receiving a null data packet (NDP) frame transmitted by the beamforming transmitting end and measuring a beamforming weight by using the weight feedback granularity requirement value as a granularity" wherein the very high throughput compressed beamforming (VCBF) frame comprises the beamforming weight using the weight feedback granularity requirement value as the granularity. Thus, the beamforming transmitting end is enabled to control the weight feedback granularity, thereby better managing users.

Provided in an embodiment of the present invention is a beamforming receiving end device 90, as shown in Fig. 9, comprising:
a beamforming report poll frame receiving unit 901, configured to receive a beamforming report poll frame (BRPF) comprising a weight feedback granularity requirement value transmitted by a beamforming transmitting end;
a second weight feedback transmitting unit 902, configured to transmit a very high throughput compressed beamforming (VCBF) frame to the beamforming transmitting end, wherein the very high throughput compressed beamforming (VCBF) frame comprises a beamforming weight using the weight feedback granularity requirement value as a granularity.

In addition, the weight feedback granularity requirement value is set in the BRPF.

The embodiment of the present invention provides a beamforming receiving end device. The device receives a beamforming report poll frame (BRPF) comprising the weight feedback granularity requirement value transmitted by the beamforming transmitting end, and transmits a very high throughput compressed beamforming (VCBF) frame to the beamforming transmitting end, wherein the very high throughput compressed beamforming (VCBF) frame comprises the beamforming weight using the weight feedback granularity requirement value as a granularity. Thus, the beamforming transmitting end is enabled to control the weight feedback granularity, thereby better managing users.

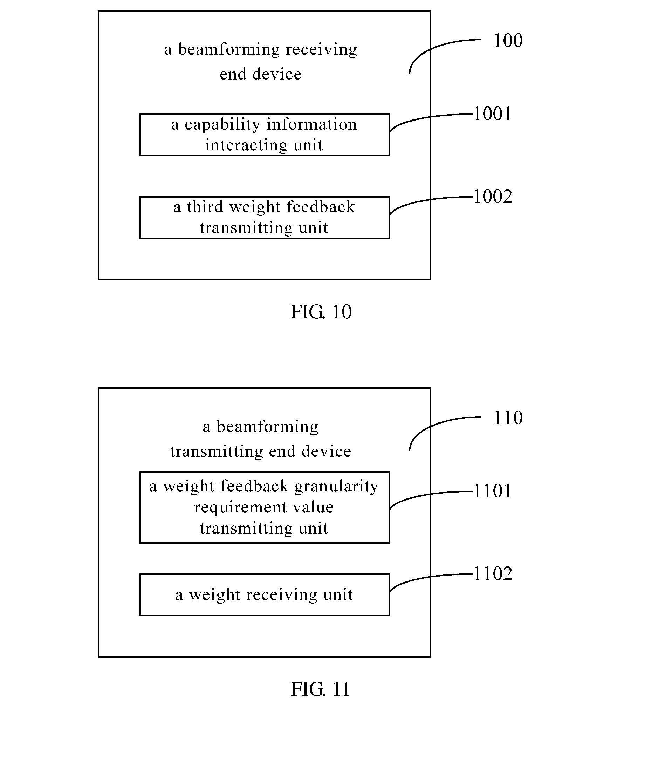

Provided in an embodiment of the present invention is a beamforming receiving end device 100, as shown in Fig. 10, comprising:
a capability information interacting unit 1001, configured to receive capability interaction information comprising a weight feedback granularity requirement value transmitted by a beamforming transmitting end;
a third weight feedback transmitting unit 1002, configured to transmitting a very high throughput compressed beamforming (VCBF) frame to the beamforming transmitting end after receiving a null data packet (NDP) frame transmitted by the beamforming transmitting end and measuring a beamforming weight by using the weight feedback granularity requirement value as the granularity, wherein the very high throughput compressed beamforming (VCBF) frame comprises the beamforming weight using the weight feedback granularity requirement value as the granularity.

In addition, the weight feedback granularity requirement value may be set in a newly added weight feedback granularity request field in very high throughput capability information (VCIF) of the capability interaction information, and may also be set in a reserved information field in the VCIF.

The embodiment of the present invention provides a beamforming receiving end device. The device receives capability interaction information comprising a weight feedback granularity requirement value transmitted by the beamforming transmitting end, , and transmits a very high throughput compressed beamforming (VCBF) frame to the beamforming transmitting end after receiving a null data packet (NDP) frame transmitted by the beamforming transmitting end and measuring a beamforming weight by using the weight feedback granularity requirement value as a granularity" wherein the very high throughput compressed beamforming (VCBF) frame comprises the beamforming weight using the weight feedback granularity requirement value as the granularity. Thus, the beamforming transmitting end is enabled to control the weight feedback granularity, thereby better managing users.

Provided in an embodiment of the present invention is a beamforming transmitting end device 110, as shown in Fig. 11, comprising:
a weight feedback granularity requirement value transmitting unit 1101, configured to transmit a weight feedback granularity requirement value to a beamforming receiving end;
a weight receiving unit 1102, configured to receive a beamforming weight returned by the beamforming receiving end.

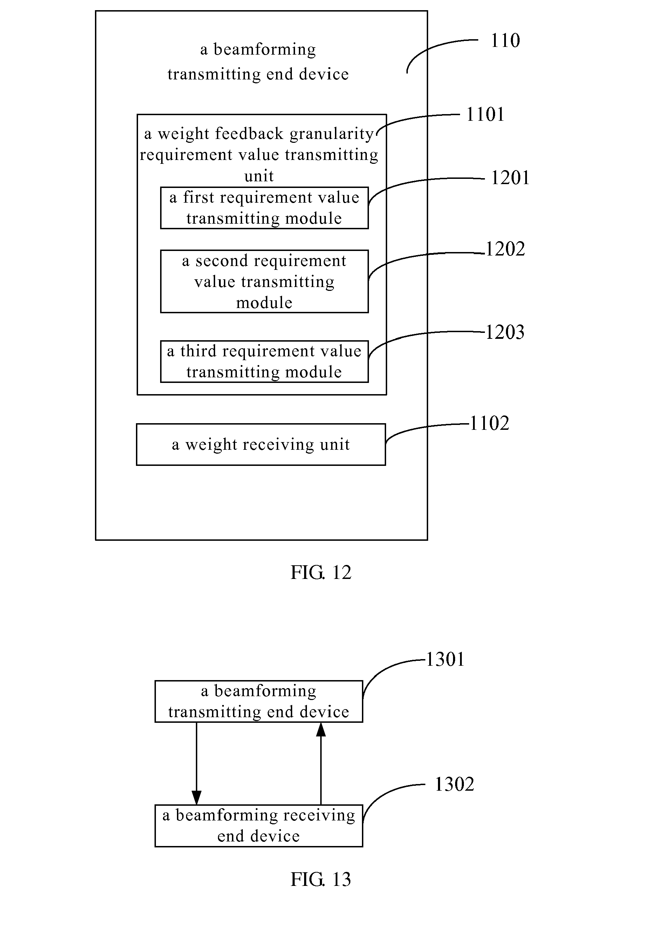

Further, the weight feedback granularity requirement value transmitting unit 1101, as shown in Fig. 12, further comprises:
a first requirement value transmitting module 1201, configured to transmit the weight feedback granularity requirement value to the beamforming receiving end through a null data packet announcement (NDPA) frame;
a second requirement value transmitting module 1202, configured to transmit the weight feedback granularity requirement value to the beamforming receiving end through a beamforming report poll frame (BRPF);
a third requirement value transmitting module 1203, configured to transmit the weight feedback granularity requirement value to the beamforming receiving end through very high throughput capability information (VCIF).

The embodiment of the present invention provides a beamforming transmitting end device. The device transmits a weight feedback granularity requirement value to a beamforming receiving end, and receives a beamforming weight returned by the beamforming receiving end. Thus, the beamforming transmitting end is enabled to control the weight feedback granularity, thereby better managing users.

It should be noted that, in actual application, the beamforming receiving end device may be a base station, and the beamforming transmitting end device may be a user terminal.

Also provided in an embodiment of the present invention is a system for setting a weight feedback granularity, as shown in Fig. 13, comprising:
a beamforming transmitting end device 1301, configured to transmit a weight feedback granularity requirement value to a beamforming receiving end through a null data packet announcement (NDPA) frame; or
to transmit a weight feedback granularity requirement value to the beamforming receiving end through a beamforming report poll frame (BRPF); or
to transmit a weight feedback granularity requirement value to the beamforming receiving end through very high throughput capability information (VCIF);
a beamforming receiving end device 1302, configured to receive the weight feedback granularity requirement value transmitted by the beamforming transmitting end, and to return a beamforming weight using the weight feedback granularity requirement value as a granularity through a very high throughput compressed beamforming (VCBF) frame;
wherein the beamforming transmitting end is further configured to receive the beamforming weight returned by the beamforming receiving end.

The embodiment of the present invention provides a system for setting a weight feedback granularity. A beamforming transmitting end device transmits a weight feedback granularity requirement value to a beamforming receiving end through a null data packet announcement (NDPA) frame or a beamforming report poll frame (BRPF) or very high throughput capability information (VCIF), and receives a beamforming weight returned by the beamforming receiving end device. Therefore, the beamforming transmitting end is enabled to control the weight feedback granularity, thereby better managing users.

The foregoing descriptions are merely specific embodiments of the present invention, rather than limiting the protection scope of the present invention. Any change or substitution that is easily conceived for those skilled in the art within the technical scope disclosed by the embodiments of the present invention shall fall into the protection scope of the present invention. Therefore, the protection scope of the present invention shall be defined by the claims.

## Claims

1. A method for setting a weight feedback granularity, :
receiving a null data packet announcement (NDPA) frame comprising a weight feedback granularity requirement value transmitted by a beamforming transmitting end;
receiving a null data packet (NDP) frame transmitted by the beamforming transmitting end, measuring a beamforming weight by using the weight feedback granularity requirement value as a granularity, and transmitting a very high throughput compressed beamforming (VCBF) frame to the beamforming transmitting end, wherein the very high throughput compressed beamforming (VCBF) frame comprises the beamforming weight using the weight feedback granularity requirement value as the granularity.

2. The method according to claim 1, wherein the weight feedback granularity requirement value is set in a reserved information field in a sounding sequence field of the NDPA; or
the weight feedback granularity requirement value is set in a newly added weight feedback granularity request field in the NDPA; or
the weight feedback granularity requirement value is set in a reserved information field in site information of the NDPA; or
the weight feedback granularity requirement value is set in a newly added weight feedback granularity request field in the site information.

3. A method for setting a weight feedback granularity, comprising:
receiving a beamforming report poll frame (BRPF) comprising a weight feedback granularity requirement value transmitted by a beamforming transmitting end ;
transmitting a very high throughput compressed beamforming (VCBF) frame to the beamforming transmitting end, wherein the very high throughput compressed beamforming (VCBF) frame comprises a beamforming weight using the weight feedback granularity requirement value as a granularity.

4. The method according to claim 3, wherein the weight feedback granularity requirement value is set in the BRPF.

5. A method for setting a weight feedback granularity, comprising:
receiving capability interaction information comprising a weight feedback granularity requirement value transmitted by a beamforming transmitting end;
receiving a null data packet (NDP) frame transmitted by the beamforming transmitting end, measuring a beamforming weight by using the weight feedback granularity requirement value as a granularity, and transmitting a very high throughput compressed beamforming (VCBF) frame to the beamforming transmitting end, wherein the very high throughput compressed beamforming (VCBF) frame comprises the beamforming weight using the weight feedback granularity requirement value as the granularity.

6. The method according to claim 5, wherein the weight feedback granularity requirement value is set in a newly added weight feedback granularity request field in very high throughput capability information (VCIF) of the capability interaction information; or
the weight feedback granularity requirement value is set in a reserved information field in the VCIF.

7. A method for setting a weight feedback granularity, comprising:
transmitting a weight feedback granularity requirement value to a beamforming receiving end;
receiving a beamforming weight using the weight feedback granularity requirement value as a granularity, which is returned by the beamforming receiving end.

8. The method according to claim 7, wherein the transmitting a weight feedback granularity requirement value to a beamforming receiving end comprises:
transmitting the weight feedback granularity requirement value to the beamforming receiving end through a null data packet announcement (NDPA) frame; or
transmitting the weight feedback granularity requirement value to the beamforming receiving end through a beamforming report poll frame (BRPF); or
transmitting the weight feedback granularity requirement value to the beamforming receiving end through very high throughput capability information (VCIF).

9. A beamforming receiving end device, comprising:
a null data packet announcement frame receiving unit, configured to receive a null data packet announcement (NDPA) frame comprising a weight feedback granularity requirement value transmitted by a beamforming transmitting end;
a first weight feedback transmitting unit, configured to transmit a very high throughput compressed beamforming (VCBF) frame to the beamforming transmitting end, after receiving a null data packet (NDP) frame transmitted by the beamforming transmitting end and measuring a beamforming weight by using the weight feedback granularity requirement value as a granularity, wherein the very high throughput compressed beamforming (VCBF) frame comprises the beamforming weight using the weight feedback granularity requirement value as the granularity.

10. The beamforming receiving end device according to claim 9, wherein the weight feedback granularity requirement value is set in a reserved information field in a sounding sequence field of the NDPA; or
the weight feedback granularity requirement value is set in a newly added weight feedback granularity request field in the NDPA; or
the weight feedback granularity requirement value is set in a reserved information field in site information of the NDPA; or
the weight feedback granularity requirement value is set in a newly added weight feedback granularity request field in the site information.

11. A beamforming receiving end device, comprising:
a beamforming report poll frame receiving unit, configured to receive a beamforming report poll frame (BRPF) comprising a weight feedback granularity requirement value transmitted by a beamforming transmitting end;
a second weight feedback transmitting unit, configured to transmit a very high throughput compressed beamforming (VCBF) frame to the beamforming transmitting end, wherein the very high throughput compressed beamforming (VCBF) frame comprises a beamforming weight using the weight feedback granularity requirement value as a granularity.

12. The beamforming receiving end device according to claim 11, wherein the weight feedback granularity requirement value is set in the BRPF.

13. A beamforming receiving end device, comprising:
a capability information interacting unit, configured to receive capability interaction information comprising a weight feedback granularity requirement value transmitted by a beamforming transmitting end;
a third weight feedback transmitting unit, configured to transmit a very high throughput compressed beamforming (VCBF) frame to the beamforming transmitting end, after receiving a null data packet (NDP) frame transmitted by the beamforming transmitting end and measuring a beamforming weight by using the weight feedback granularity requirement value as a granularity, wherein the very high throughput compressed beamforming (VCBF) frame comprises the beamforming weight using the weight feedback granularity requirement value as the granularity.

14. The beamforming receiving end device according to claim 13, wherein the weight feedback granularity requirement value is set in a newly added weight feedback granularity request field in very high throughput capability information (VCIF) of the capability interaction information; or
the weight feedback granularity requirement value is set in a reserved information field in the VCIF.

15. A beamforming transmitting end device, comprising:
a weight feedback granularity requirement value transmitting unit, configured to transmit a weight feedback granularity requirement value to a beamforming receiving end;
a weight receiving unit, configured to receive a beamforming weight returned by the beamforming receiving end.

16. The beamforming transmitting end device according to claim 15, the weight feedback granularity requirement value transmitting unit further comprises:
a first requirement value transmitting module, configured to transmit the weight feedback granularity requirement value to the beamforming receiving end through a null data packet announcement (NDPA) frame;
a second requirement value transmitting module, configured to transmit the weight feedback granularity requirement value to the beamforming receiving end through a beamforming report poll frame (BRPF);
a third requirement value transmitting module, configured to transmit the weight feedback granularity requirement value to the beamforming receiving end through very high throughput capability information (VCIF).

17. A system for setting a weight feedback granularity, comprising:a beamforming transmitting end device, configured to transmit a weight feedback granularity requirement value to a beamforming receiving end through a null data packet announcement (NDPA) frame; or
to transmit a weight feedback granularity requirement value to a beamforming receiving end through a beamforming report poll frame (BRPF); or
to transmit a weight feedback granularity requirement value to a beamforming receiving end through very high throughput capability information (VCIF);
a beamforming receiving end device, configured to receive the weight feedback granularity requirement value transmitted by the beamforming transmitting end, and to return a beamforming weight using the weight feedback granularity requirement value as a granularity through a very high throughput compressed beamforming (VCBF) frame;
wherein the beamforming transmitting end device is further configured to receive the beamforming weight returned by the beamforming receiving end device.
